# EUROPEAN PATENT SPECIFICATION

(11) **EP 3 389 345 B1**
(45) Date of publication and mention of the grant of the patent: **21.10.2020**
(21) Application number: 16872909.3
(22) Date of filing: 02.12.2016
(51) Int. Cl.: H05H 1/24, B01D 53/92, F01N 3/01, F01N 3/08, F01N 3/021, F01N 3/027

(54) **PLASMA REACTOR AND PLASMA ELECTRODE PLATE**
PLASMAREAKTOR UND PLASMAELEKTRODENPLATTE
RÉACTEUR À PLASMA ET PLAQUE D'ÉLECTRODE À PLASMA

(30) Priority: 09.12.2015 JP 2015240209
(43) Date of publication of application: 17.10.2018
(73) Proprietor: NGK Spark Plug Co., Ltd., Nagoya-shi, Aichi 467-8525 (JP)
(72) Inventor: NIWAYA Naoki, Nagoya-shi Aichi 467-8525 (JP); NADANAMI Norihiko, Nagoya-shi Aichi 467-8525 (JP); SAKAI Shigehito, Nagoya-shi Aichi 467-8525 (JP)
(74) Representative: Zimmermann & Partner Patentanwälte mbB
(86) International application number: PCT/JP2016/085875
(87) International publication number: WO 2017/099011

(56) References cited:
- EP-A1- 1 638 377
- EP-A1- 1 933 606
- EP-A1- 2 174 707
- EP-A2- 2 081 417
- WO-A1-2005/055678
- JP-A- 2007 144 244
- JP-A- 2010 287 404
- JP-A- 2010 287 404
- US-A1- 2007 119 828

## Description

### TECHNICAL FIELD

The present invention relates to a plasma reactor suitable for use in an apparatus for cleaning exhaust gas from an internal combustion engine, and to a plasma electrode plate capable of generating plasma through application of voltage.

### BACKGROUND ART

In a conventionally proposed plasma reactor, exhaust gas from an engine or an incinerator is caused to flow through a plasma field, thereby treating toxic substances contained in the exhaust gas, such as carbon monoxide (CO), hydrocarbon (HC), nitrogen oxide (NOx), and particulate matter (PM).

For example, there have been proposed various plasma reactors including a plurality of dielectric bodies disposed away from one another such that a gap is formed between adjacent dielectric bodies, each of the dielectric bodies including an electrode therein. In such a plasma reactor, voltage is applied between adjacent electrodes to thereby generate plasma by dielectric barrier discharge, and PM contained in exhaust gas flowing between the electrodes is oxidized and removed by means of the plasma (see, for example, Patent Document 1). Specifically, the technique disclosed in Patent Document 1 relates to a plasma reactor including a plurality of plate-like unit electrodes (electrode plates), wherein voltage is applied between adjacent unit electrodes to thereby generate plasma. In this plasma reactor, at least one unit electrode includes a plate-like ceramic dielectric body having a plurality of grooves on a surface thereof, and an electrically conductive film (electrode) included in the ceramic dielectric body.

### PRIOR ART DOCUMENT

### PATENT DOCUMENT

Patent Document 1: WO 2005/055678 (e.g., FIG. 1)

JP 2010 287404 A discloses a discharge electrode and a manufacturing method of a discharge electrode; JP 2007 144244 A discloses a discharge plasma treatment device; EP 1 933 606 A1 discloses an electrode for a plasma reactor, comprising a plurality of electric-potential concentrating portion that are formed on at least one surface of a metal plate so as to protrude from the surface; EP 2 081 417 A2 discloses a ceramic plasma reactor and reaction apparatus, EP 1 638 377 A1 discloses a plasma generating electrode, a plasma generation device, and an exhaust gas purifying apparatus, and EP 2 174 707 A1 discloses an electrode for plasma generation comprising a plurality of collecting portions having a plurality of through holes. US 2007/119828 A1 describes a plasma generating electrode, its manufacturing method, and plasma reactor.

### SUMMARY OF THE INVENTION

Herein is disclosed the plasma electrode plate as defined in appended claim 1, and a plasma reactor as defined in appended claim 7.

### PROBLEM TO BE SOLVED BY THE INVENTION

In a common plasma reactor, electric field intensity is locally increased between adjacent electrode plates, and discharge occurs at a site of high electric field intensity. In the conventional technique disclosed in Patent Document 1, the plate-like electrode included in the dielectric body has no holes, and thus electric field is averaged between adjacent electrode plates, leading to an overall reduction in electric field intensity. Consequently, discharge is less likely to occur, and thus plasma may fail to be reliably generated through discharge, resulting in low exhaust gas cleaning performance.

In view of the foregoing, an object of the present invention is to provide a plasma reactor and a plasma electrode plate each being capable of reliably generating plasma by preventing a reduction in electric field intensity between adjacent electrode plates.

### MEANS FOR SOLVING THE PROBLEM

Means for solving the aforementioned problems (means 1) is a plasma reactor comprising a plurality of electrode plates each including a plate-like dielectric body having a main surface and a back surface, and an electrode included in the dielectric body, the electrode plates being stacked such that a gap is formed between adjacent electrode plates, the plasma reactor being adapted to generate plasma upon application of voltage between adjacent electrode plates, the plasma reactor being characterized in that the electrode has a plurality of through holes each penetrating the electrode in a thickness direction, and the dielectric body covers the electrode so as to extend along the outer surface of the electrode and has an unevenly shaped portion on each of the main surface and the back surface wherein a region of the dielectric body having the unevenly shaped portion has a wavy cross section.

According to the invention described as means 1, the electrode included in the dielectric body has a plurality of through holes, and thus concentration of electric field occurs at opening edges of the through holes between adjacent electrode plates, resulting in a local increase in electric field intensity. The dielectric body covers the electrode so as to extend along (namely, follow) the outer surface of the electrode and has an unevenly shaped portion on each of the main surface and the back surface. In this case, concentration of electric field occurs at each convex portion of the dielectric body where electric field intensity tends to increase due to a small distance between that convex portion and a corresponding convex portion of an adjacent dielectric body, and therefore, the electric field intensity increases further. Consequently, discharge occurs more easily, and plasma can be reliably generated through discharge. Therefore, PM contained in exhaust gas flowing between adjacent electrode plates can be efficiently oxidized and removed by means of the plasma. Since the electric power supplied to the electrode plates does not need to be increased for increasing electric field intensity for reliable discharge, the electric power cost for discharge can be reduced.

As described above, each of the electrode plates of the plasma reactor is composed of a plate-like dielectric body and an electrode included therein. Examples of the material for the dielectric body include ceramic materials, such as alumina (Al₂O₃), aluminum nitride (AIN), and yttrium oxide (Y₂O₃), and mixtures of these materials. Examples of the material for the electrode include tungsten (W), molybdenum (Mo), ruthenium oxide (RuO₂), silver (Ag), copper (Cu), and platinum (Pt).

No particular limitation is imposed on the number of electrodes included in the dielectric body. However, incorporation of a plurality of electrodes into the dielectric body causes an increase in the weight of the electrode plates and thus an increase in the weight of the entire plasma reactor. Hence, the dielectric body of each electrode plate preferably includes one layered electrode.

The electrode may have a plurality of through holes defined by a plurality of first linear portions extending in a first direction and a plurality of second linear portions extending in a second direction intersecting with the first direction. In such a case, since the through holes having opening edges at which concentration of electric field occurs can be easily formed, plasma can be efficiently generated.

A portion of the dielectric body covering the surface of the electrode on the main surface side or the back surface side has a thickness of preferably 1 µm to 5,000 µm, particularly preferably 3 µm to 3,000 µm, still more preferably 30 µm to 1,000 µm. A thickness of the portion of the dielectric body of less than 1 µm may result in failure to prevent oxidation of the electrode, whereas a thickness of the portion of the dielectric body of more than 5,000 µm may result in failure to efficiently generate plasma.

As viewed in a thickness direction of each of the electrode plates, the electrode is preferably present in a region of the dielectric body corresponding to a convex portion of the unevenly shaped portion. In such a case, the thickness of the portion of the dielectric body covering the surface of the electrode on the main surface side or the back surface side can be adjusted to fall within a preferred range described above (specifically, 1 µm to 5,000 µm). Thus, the dielectric body can reliably prevent oxidation of the electrode, and plasma can be efficiently generated.

A region of the dielectric body having the unevenly shaped portion preferably has a wavy cross section. In such a case, since the dielectric body can be uniformly thinned, discharge occurs well, whereby plasma can be generated more efficiently.

A concave portion of the unevenly shaped portion on the main surface of the dielectric body may have a depth larger than that of a concave portion of the unevenly shaped portion on the back surface of the dielectric body. In such a case, when two electrode plates are stacked such that a gap is formed therebetween, electric field intensity can be increased between a convex portion on the main surface of one of the electrode plates and a convex portion on the back surface of the other electrode plate. Thus, discharge occurs more easily.

Another means for solving the aforementioned problems (means 2) is a plasma electrode plate comprising a plate-like dielectric body having a main surface and a back surface, and an electrode included in the dielectric body, the electrode being adapted to generate plasma upon application of voltage, the plasma electrode plate being characterized in that the electrode has a plurality of through holes each penetrating the electrode in a thickness direction, and the dielectric body covers the electrode so as to extend along the outer surface of the electrode and has an unevenly shaped portion on each of the main surface and the back surface.

According to the invention described as means 2, the electrode included in the dielectric body has a plurality of through holes. Thus, in the case where the plasma electrode plate is used together with an additional plasma electrode plate disposed adjacently, concentration of electric field occurs at opening edges of the through holes, resulting in a local increase in electric field intensity. The dielectric body covers the electrode so as to extend along (namely, follow) the outer surface of the electrode and has an unevenly shaped portion on each of the main surface and the back surface. In this case, concentration of electric field occurs at each convex portion of the dielectric body where electric field intensity tends to increase due to a small distance between that convex portion and a corresponding convex portion of the dielectric body of the additional plasma electrode plate, and therefore, the electric field intensity increases further. Consequently, discharge occurs more easily, and plasma can be reliably generated through discharge. Therefore, PM contained in exhaust gas flowing between the plasma electrode plates disposed adjacently to each other can be efficiently oxidized and removed by means of the plasma. Since the electric power supplied to the electrode plates does not need to be increased for increasing electric field intensity for reliable discharge, the electric power cost for discharge can be reduced.

### BRIEF DESCRIPTION OF THE DRAWINGS

FIG. 1 is a schematic sectional view showing a plasma reactor according to the present embodiment.
FIG. 2 is a schematic perspective view illustrating a state where two electrode plates are disposed separately from each other.
FIG. 3 is a plan view of an electrode.
FIG. 4 is a sectional view of the electrode taken along line A-A of FIG. 3.
FIG. 5 is a schematic sectional view illustrating a method for forming an electrode plate.
FIG. 6 is a plan view showing an electrode according to another embodiment.
FIG. 7 is a plan view showing an electrode according to still another embodiment.
FIG. 8 is a schematic sectional view showing a plasma reactor according to yet another embodiment.
FIG. 9 is a schematic sectional view showing a plasma reactor according to yet another embodiment.

### MODES FOR CARRYING OUT THE INVENTION

A plasma reactor 1, which is an embodiment of the present invention, will next be described in detail with reference to the drawings.

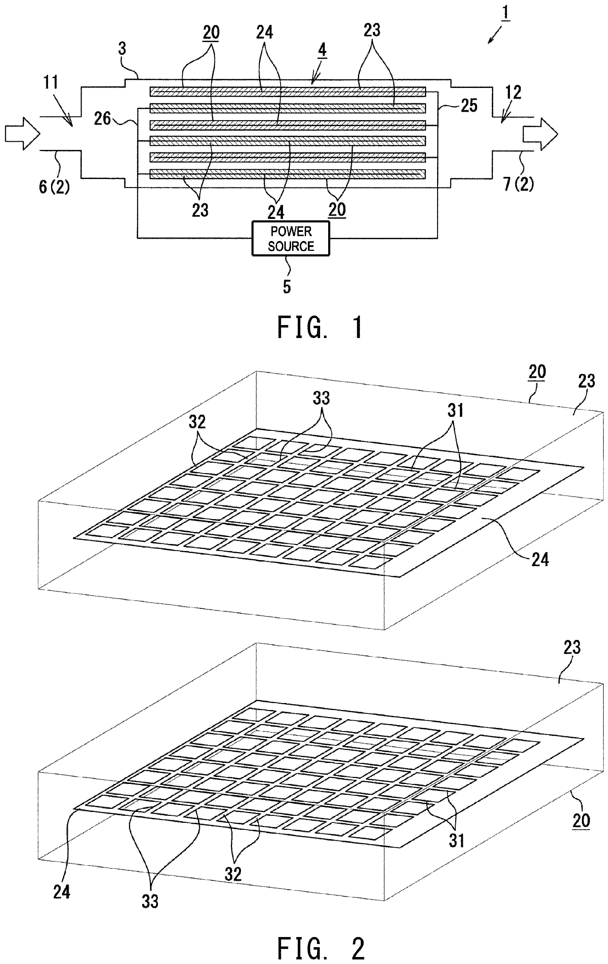

As illustrated in FIG. 1, the plasma reactor 1 according to the present embodiment is an apparatus for removing PM contained in exhaust gas from an automotive engine (not illustrated) and is attached to an exhaust pipe 2. The plasma reactor 1 includes a casing 3, an electrode plate laminate 4, and a power source 5.

The casing 3 is formed of, for example, stainless steel and has a tubular shape. The casing 3 has an exhaust gas inlet 11 at a first end (left end in FIG. 1) and an exhaust gas outlet 12 at a second end (right end in FIG. 1). The exhaust gas inlet 11 is connected to an upstream portion 6 (i.e., an engine-side portion) of the exhaust pipe 2, and the exhaust gas outlet 12 is connected to a downstream portion 7 (i.e., a portion opposite the engine-side portion) of the exhaust pipe 2. Exhaust gas from the engine flows through the upstream portion 6 of the exhaust pipe 2 and then enters the casing 3 via the exhaust gas inlet 11. The exhaust gas then flows through the casing 3 and is discharged from the exhaust gas outlet 12 to the downstream portion 7 of the exhaust pipe 2.

As illustrated in FIGS. 1 and 2, the electrode plate laminate 4 is disposed in the casing 3 and includes a plurality of plasma electrode plates 20 (hereinafter may be referred to as "electrode plates 20"). The electrode plates 20 are disposed in parallel with a direction of flow of exhaust gas through the casing 3 (i.e., in a direction from the exhaust gas inlet 11 toward the exhaust gas outlet 12) and are stacked such that a gap (gap of 0.5 mm in the present embodiment) is formed between adjacent electrode plates 20. For the sake of convenience of description, the plasma reactor according to the present embodiment has a structure including six electrode plates 20; however, an actual plasma reactor includes a larger number of electrode plates 20.

As illustrated in FIG. 1, a first wire 25 and a second wire 26 are alternately connected to the electrode plates 20 in a thickness direction of the electrode plate laminate 4. The first wire 25 and the second wire 26 are electrically connected to a first terminal and a second terminal of the power source 5, respectively.

As illustrated in FIGS. 1 to 4, each electrode plate 20 is composed of a rectangular plate-like dielectric body 23 having a main surface 21 and a back surface 22, and one layered electrode 24 included in the dielectric body 23. The dielectric body 23 is formed of a ceramic material, such as alumina (Al₂O₃), and the electrode 24 is formed of, for example, tungsten (W). A portion of the electrode 24 exposed from the dielectric body 23 is plated with, for example, Ni.

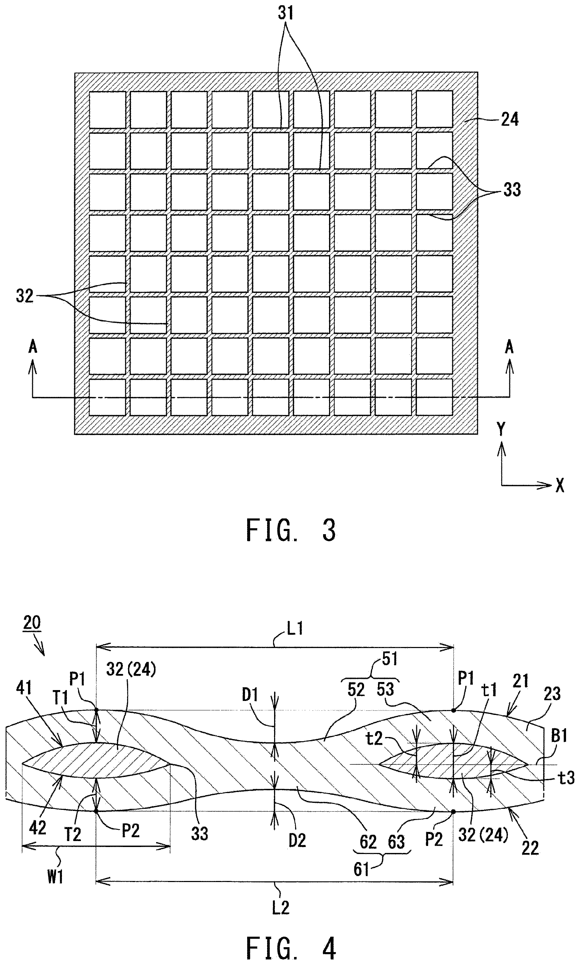

As illustrated in FIG. 4, each of first linear portions 31 and second linear portions 32 forming the electrode 24 has a thicknesswise cross section which is convex toward the main surface 21 side and the back surface 22 side. In specific, the surface 41 of each of the linear portions 31 and 32 on the main surface 21 side and the surface 42 of each of the linear portions 31 and 32 on the back surface 22 side are curved surfaces. In the present embodiment, the cross section of each of the linear portions 31 and 32 has a so-called convex lens shape. Each of the linear portions 31 and 32 has an overall thickness t1 of 10 µm and a width W1 of 300 µm. In each of the linear portions 31 and 32, a portion convex toward the main surface 21 side has a thickness t2 of 7 µm from a baseline B1 provided at a level where the linear portion has the maximum width. In each of the linear portions 31 and 32, a portion convex toward the back surface 22 side has a thickness t3 of 3 µm from the baseline B1. Thus, in each of the linear portions 31 and 32, the thickness t2 of the portion convex toward the main surface 21 side is larger than the thickness t3 of the portion convex toward the back surface 22 side.

As illustrated in FIGS. 2 to 4, each electrode 24 has a plurality of through holes 33 penetrating the electrode 24 in the thickness direction thereof and defined by a plurality of first linear portions 31 and a plurality of second linear portions 32. Specifically, the first linear portions 31 of the electrode 24 extend straightly in an X-axis direction (first direction) in parallel with the flow direction of exhaust gas and are disposed at regular intervals in a Y-axis direction (second direction) perpendicular to the X-axis direction. The second linear portions 32 of the electrode 24 extend straightly in the Y-axis direction and are disposed at regular intervals in the X-axis direction. Thus, the first linear portions 31 and the second linear portions 32 form a grid pattern of 0.5 mm × 0.5 mm squares in plan view. Therefore, each of the through holes 33 defined by the first linear portions 31 and the second linear portions 32 has a square shape in plan view.

The dielectric body 23 covers the electrode 24 so as to extend along the outer surface of the electrode 24. As illustrated in FIG. 4, a portion of the dielectric body 23 covering the surface 41 of the electrode 24 on the main surface 21 side has a maximum thickness T1 of 1 µm to 5,000 µm (220 µm in the present embodiment). Similarly, a portion of the dielectric body 23 covering the surface 42 of the electrode 24 on the back surface 22 side has a maximum thickness T2 of 1 µm to 5,000 µm (220 µm in the present embodiment). The dielectric body 23 has an overall thickness of 440 µm (= 0.44 mm).

The dielectric body 23 has a first unevenly shaped portion 51 on the main surface 21 and a second unevenly shaped portion 61 on the back surface 22. Thus, in the present embodiment, a region of the dielectric body 23 having the first unevenly shaped portion 51 and a region of the dielectric body 23 having the second unevenly shaped portion 61 have a wavy cross section. The first unevenly shaped portion 51 has a plurality of first concave portions 52 and a plurality of first convex portions 53, and the second unevenly shaped portion 61 has a plurality of second concave portions 62 and a plurality of second convex portions 63. As viewed in the thickness direction of the electrode plate 20, the electrode 24 is present in regions of the dielectric body 23 corresponding to the convex portions 53 and 63.

As illustrated in FIG. 4, the first convex portions 53 are provided on the main surface 21 at regular intervals, and the second convex portions 63 are provided on the back surface 22 at regular intervals. The distance L1 between the tops P1 of adjacent first convex portions 53 is 0.2 mm to 10 mm, more preferably 0.2 mm to 5 mm (0.8 mm in the present embodiment). Similarly, the distance L2 between the tops P2 of adjacent second convex portions 63 is 0.2 mm to 10 mm, more preferably 0.2 mm to 5 mm (0.8 mm in the present embodiment).

The first concave portions 52 are provided on the main surface 21 at regular intervals, and the second concave portions 62 are provided on the back surface 22 at regular intervals. The maximum value of depth D1 of the first concave portions 52 from the top P1 of the first convex portions 53 is 2 µm to 20 µm, more preferably 3 µm to 8 µm (7 µm in the present embodiment). The maximum value of depth D2 of the second concave portions 62 from the top P2 of the second convex portions 63 is 1 µm to 15 µm, more preferably 1 µm to 4 µm (3 µm in the present embodiment). Thus, the depth D1 of the first concave portions 52 is larger than the depth D2 of the second concave portions 62.

As illustrated in FIG. 1, the plasma reactor 1 according to the present embodiment is used for, for example, removal of PM contained in exhaust gas. In such a case, application of a pulse voltage (e.g., peak voltage: 10 kV (10,000 V), pulse repetition frequency: 100 Hz) from the power source 5 to adjacent electrode plates 20 generates dielectric barrier discharge at the opening edges of the through holes 33, and the dielectric barrier discharge generates plasma between the electrodes 24. The generation of plasma causes oxidation and removal of PM contained in exhaust gas flowing between the electrodes 24.

Next will be described a method for producing the plasma reactor 1.

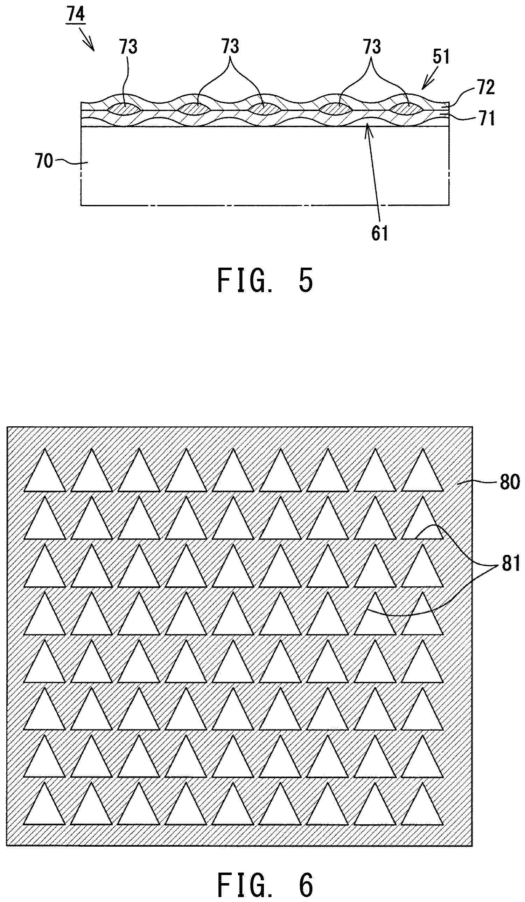

Firstly, ceramic green sheets 71 and 72 (see FIG. 5) are formed from a ceramic material containing alumina powder as a main component. The ceramic green sheets 71 and 72 can be formed by a well known process, such as tape casting or extrusion molding.

Subsequently, the ceramic green sheet 71 is placed on a support 70 (see FIG. 5). An electrically conductive paste (tungsten paste in the present embodiment) is then applied (printed) onto the main surface of the ceramic green sheet 71, whereby an unfired electrode 73 (thickness: 10 µm) having through holes 33 is formed on the main surface of the ceramic green sheet 71 (see FIG. 5). The unfired electrode 73 can be formed on the ceramic green sheet 71 by a well known printing process, such as screen printing.

After drying of the electrically conductive paste, the ceramic green sheet 72 is placed on the main surface of the ceramic green sheet 71 having the unfired electrode 73 printed thereon, and pressure is applied to these sheets in a direction of lamination. Thus, the ceramic green sheets 71 and 72 are integrated to thereby form a ceramic laminate 74 (see FIG. 5). Accordingly, a first unevenly shaped portion 51 is formed on the main surface of the ceramic green sheet 72 so as to extend along the unfired electrode 73, and a second unevenly shaped portion 61 is formed on the back surface of the ceramic green sheet 71 so as to extend along the unfired electrode 73.

Subsequently, the ceramic laminate 74 (the ceramic green sheets 71 and 72 and the unfired electrode 73) is subjected to, for example, drying and degreasing processes by well known techniques, and then heated to a predetermined temperature (e.g., about 1,400°C to about 1,600°C) at which alumina and tungsten can be co-sintered. Consequently, alumina contained in the ceramic green sheets 71 and 72 is co-sintered with tungsten contained in the electrically conductive paste, whereby the ceramic green sheets 71 and 72, the unfired electrode 73, and the ceramic laminate 74 become the dielectric body 23, the electrode 24, and the electrode plate 20, respectively.

Thereafter, a plurality of electrode plates 20 are laminated to thereby form the electrode plate laminate 4. Subsequently, the first wire 25 and the second wire 26 are connected to the electrode plates 20 of the electrode plate laminate 4. The plasma reactor 1 is completed through the aforementioned processes.

Thus, the present embodiment can achieve effects described below.
(1) In the plasma reactor 1 according to the present embodiment, the electrode 24 included in the dielectric body 23 has a plurality of through holes 33, and thus concentration of electric field occurs at opening edges of the through holes 33 between adjacent electrode plates 20, resulting in a local increase in electric field intensity. The dielectric body 23 covers the electrode 24 so as to extend along (namely, follow) the outer surface of the electrode 24 and has the unevenly shaped portions 51 and 61 on the main surface 21 and the back surface 22, respectively. In this case, concentration of electric field occurs at each convex portion (first convex portion 53) of the dielectric body 23 where electric field intensity tends to increase due to a small distance between that convex portion and a corresponding convex portion (second convex portion 63) of an adjacent dielectric body 23 (electrode plates 20), and therefore, the electric field intensity increases further. Consequently, discharge occurs more easily, and plasma can be reliably generated through discharge. Therefore, PM contained in exhaust gas flowing between adjacent electrode plates 20 can be efficiently oxidized and removed by means of the plasma. Since the electric power supplied to the electrode plates does not need to be increased for increasing electric field intensity for reliable discharge, the electric power cost for discharge can be reduced.
(2) In the present embodiment, each of the through holes 33 of the electrode 24 has a square shape in plan view; i.e., a shape having corners in plan view. The corners are likely to become starting points of discharge. Thus, discharge occurs at many points in the present embodiment wherein each of the through holes 33 has a polygonal shape having a plurality of corners. Therefore, plasma can be reliably generated in a broad region.

The aforementioned embodiment may be modified as described below.

In each electrode plate 20 according to the aforementioned embodiment, the dielectric body 23 includes one layered electrode 24 therein. However, a plurality of electrodes 24 may be provided in a region that does not contribute to generation of plasma (e.g., a conduction line or a conduction layer).

In the aforementioned embodiment, each of the linear portions 31 and 32 has a thicknesswise cross section which is convex toward the main surface 21 side and the back surface 22 side. The linear portions 31 and 32 may partially have a cross section convex toward the main surface 21 side and the back surface 22 side. The cross section of each of the linear portions 31 and 32 has a so-called convex lens shape in the aforementioned embodiment; however, the cross section may have another shape (e.g., a circular shape).

In the aforementioned embodiment, a region of the main surface 21 of the dielectric body 23 where the first unevenly shaped portion 51 is provided and a region of the back surface 22 of the dielectric body 23 where the second unevenly shaped portion 61 is provided each have a wavy cross section. However, the first unevenly shaped portion 51 or the second unevenly shaped portion 61 may be omitted, and only the main surface 21 or the back surface 22 may have a wavy cross section.

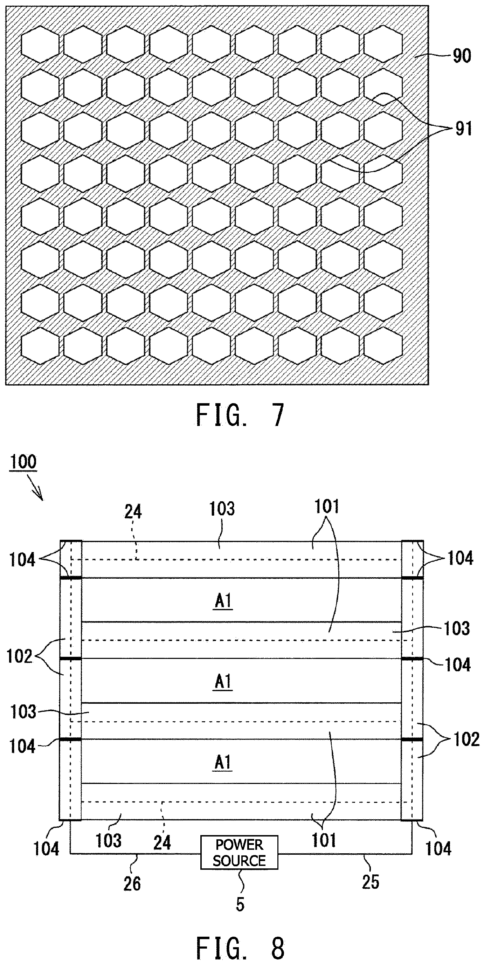

In the aforementioned embodiment, each through hole 33 has a square shape in plan view. However, each through hole 33 may have another shape; for example, a triangular shape in plan view (see through holes 81 of an electrode 80 in FIG. 6), or a hexagonal shape in plan view (see through holes 91 of an electrode 90 in FIG. 7).

In the aforementioned embodiment, each electrode plate 20 has a square grid pattern in plan view. However, the electrode plate may have, for example, a rhombic grid pattern in plan view.

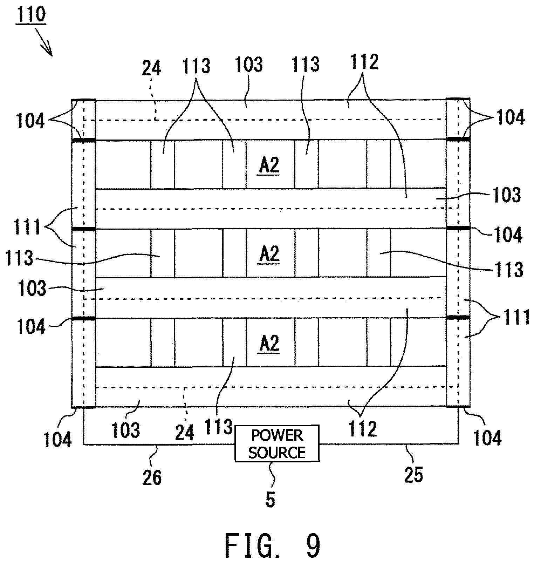

In the aforementioned embodiment, a plurality of electrode plates forming the plasma reactor may be disposed such that at least portions of the adjacent electrode plates are separated from each other to form a gap therebetween. For example, as illustrated in a plasma reactor 100 of FIG. 8, strip-form frames 102 each including an electrode plate 101 may be stacked such that a gap (plasma generation region A1) is provided between adjacent electrode plates 101. Each frame 102 may be formed integrally with the electrode plate 101. Alternatively, as illustrated in a plasma reactor 110 of FIG. 9, frames 111 (similar to the frames 102 illustrated in FIG. 8) may be used, and a plurality of spacers 113 may be disposed between adjacent electrode plates 112 such that a gap (plasma generation region A2) is provided between the electrode plates 112. Each frame 111 and each spacer 113 may be formed integrally with the electrode plate 112.

The dielectric body of each electrode plate may cover the electrode so as to extend along only the outer surface of the electrode corresponding to the aforementioned gap. Specifically, as illustrated in FIGS. 8 and 9, an electrode 104 not covered with the dielectric body 103 may be disposed between adjacent frames 102 or between adjacent frames 111. The electrode 104 is provided for establishing electrical conduction between the electrode plates 101 (or between the electrode plates 112).

Next, embodiments will be described derived from the aforementioned embodiment in addition to the embodiments described in the appended claims.
(1) A plasma reactor according to means 1 described above, wherein the electrode has a thicknesswise cross section which is convex toward the main surface side and the back surface side.
(2) A plasma reactor according to means 1 described above, wherein the electrode has a plurality of through holes defined by a plurality of first linear portions extending in a first direction and a plurality of second linear portions extending in a second direction perpendicular to the first direction, and has a grid pattern in plan view.
(3) A plasma reactor according to means 1 described above, wherein the electrode has a thicknesswise cross section which is convex toward the main surface side and the back surface side, and a portion of the electrode convex toward the main surface side has a thickness larger than that of a portion of the electrode convex toward the back surface side.
(4) A plasma reactor according to means 1 described above, wherein the unevenly shaped portion has a plurality of convex portions, and the distance between the tops of adjacent convex portions is 0.2 mm to 10 mm, more preferably 0.2 mm to 5 mm.
(5) A plasma reactor according to means 1 described above, wherein the unevenly shaped portion on the main surface of the dielectric body has a concave portion having a depth of 2 µm to 20 µm, more preferably 3 µm to 8 µm.
(6) A plasma reactor according to means 1 described above, wherein the unevenly shaped portion on the back surface of the dielectric body has a concave portion having a depth of 1 µm to 15 µm, more preferably 1 µm to 4 µm.
(7) A plasma reactor comprising a plurality of electrode plates each including a plate-like dielectric body having a main surface and a back surface, and an electrode included in the dielectric body, the electrode plates being stacked such that a gap is formed between adjacent electrode plates, the plasma reactor being adapted to generate plasma upon application of voltage between adjacent electrode plates, the plasma reactor being characterized in that the electrode has a plurality of through holes each penetrating the electrode in a thickness direction, and the dielectric body covers the electrode so as to extend along at least the outer surface of the electrode corresponding to the gap and has an unevenly shaped portion on each of the main surface and the back surface.

### DESCRIPTION OF REFERENCE NUMERALS

1, 100, 110: plasma reactor
20, 101, 112: plasma electrode plate (electrode plate)
21: main surface
22: back surface
23, 103: dielectric body
24, 80, 90: electrode
31: first linear portion
32: second linear portion
33, 81, 91: through hole
41: surface of electrode on main surface side
42: surface of electrode on back surface side
51: first unevenly shaped portion serving as an unevenly shaped portion
52: first concave portion serving as a concave portion
53: first convex portion serving as a convex portion
61: second unevenly shaped portion serving as an unevenly shaped portion
62: second concave portion serving as a concave portion
63: second convex portion serving as a convex portion
D1: depth of concave portion of unevenly shaped portion on main surface of dielectric body
D2: depth of concave portion of unevenly shaped portion on back surface of dielectric body
T1: thickness of portion of dielectric body covering surface of electrode on main surface side
T2: thickness of portion of dielectric body covering surface of electrode on back surface side

## Claims

1. A plasma electrode plate (20, 101, 112) comprising a plate-like dielectric body (23, 103) having a main surface (21) and a back surface (22), and an electrode (24, 80, 90) included in the dielectric body (23), the electrode (24, 80, 90) being adapted to generate plasma upon application of voltage, the plasma electrode plate (20, 101, 112) being **characterized in that**:
the electrode (24, 80, 90) has a plurality of through holes (33, 81, 91) each penetrating the electrode (24, 80, 90) in a thickness direction, and a surface of the electrode (24, 80, 90) is a curved surface; and
the dielectric body (23, 103) covers the electrode (24, 80, 90) so as to extend along the outer surface of the electrode (24, 80, 90) and has an unevenly shaped portion (51, 61) on each of the main surface (21) and the back surface (22);
wherein a region of the dielectric body (23, 103) having the unevenly shaped portion (51, 61) has a wavy cross section.

2. A plasma electrode plate according to claim 1, wherein the dielectric body (23, 103) includes one layered electrode (24, 80, 90).

3. A plasma electrode plate according to claim 1 or 2, wherein a portion of the dielectric body (23, 103) covering a surface (41) of the electrode (24, 80, 90) on the main surface (21) side or a surface (42) of the electrode (24, 80, 90) on the back surface (22) side has a thickness (T1, T2) of 1 µm to 5,000 µm.

4. A plasma electrode plate according to any one of claims 1 to 3, wherein, as viewed in a thickness direction, the electrode (24, 80, 90) is present in a region of the dielectric body (23, 103) corresponding to a convex portion (53, 63) of the unevenly shaped portion (51, 61).

5. A plasma electrode plate according to any one of claims 1 to 4, wherein a concave portion (52) of the unevenly shaped portion (51) on the main surface (21) of the dielectric body (23, 103) has a depth (D1) larger than a depth (D2) of a concave portion (62) of the unevenly shaped portion (61) on the back surface (22) of the dielectric body (23, 103).

6. A plasma electrode plate according to any one of claims 1 to 5, wherein the electrode (24) has a plurality of through holes (33) defined by a plurality of first linear portions (31) extending in a first direction and a plurality of second linear portions (32) extending in a second direction perpendicular to the first direction.

7. A plasma reactor (1, 100, 110) comprising a plurality of electrode plates (20, 101, 112) each including a plate-like dielectric body (23, 103) having a main surface (21) and a back surface (22), and an electrode (24, 80, 90) included in the dielectric body (23, 103), the electrode plates (20, 101, 112) being stacked such that a gap is formed between adjacent electrode plates (20, 101, 112), the plasma reactor (1, 100, 110) being adapted to generate plasma upon application of voltage between adjacent electrode plates (20, 101, 112), the plasma reactor being **characterized in that**:
the electrode (24, 80, 90) of each electrode plates (20, 101, 112) has a plurality of through holes (33, 81, 91) each penetrating the electrode (24, 80, 90) in a thickness direction, and a surface of the electrode (24, 80, 90) of each electrode plates (20, 101, 112) is a curved surface; and
the dielectric body (23, 103) of each electrode plates (20, 101, 112) covers the electrode (24, 80, 90) so as to extend along the outer surface of the electrode (24, 80, 90) and has an unevenly shaped portion on each of the main surface (21) and the back surface (22), wherein a region of the dielectric body (23, 103) having the unevenly shaped portion (51, 61) has a wavy cross section.

8. A plasma reactor according to claim 7, wherein the dielectric body (23, 103) of each electrode plate (20, 101, 112) includes one layered electrode (24, 80, 90).

9. A plasma reactor according to claim 7 or 8, wherein a portion of the dielectric body (23, 103) covering a surface (41) of the electrode (24, 80, 90) on the main surface (21) side or a surface (42) of the electrode (24, 80, 90) on the back surface (22) side has a thickness (T1, T2) of 1 µm to 5,000 µm.

10. A plasma reactor according to any one of claims 7 to 9, wherein, as viewed in a thickness direction of each of the electrode plates (20, 101, 112), the electrode (24, 80, 90) is present in a region of the dielectric body (23, 103) corresponding to a convex portion (53, 63) of the unevenly shaped portion (51, 61).

11. A plasma reactor according to any one of claims 7 to 10, wherein a concave portion (52) of the unevenly shaped portion (51) on the main surface (21) of the dielectric body (23, 103) has a depth (D1) larger than a depth (D2) of a concave portion (62) of the unevenly shaped portion (61) on the back surface (22) of the dielectric body (23, 103).

12. A plasma reactor according to any one of claims 7 to 11, wherein the electrode (24) has a plurality of through holes (33) defined by a plurality of first linear portions (31) extending in a first direction and a plurality of second linear portions (32) extending in a second direction intersecting with the first direction.

## Patentansprüche

1. Plasma-Elektrodenplatte (20, 101, 112) aufweisend einen plattenähnlichen dielektrischen Körper (23, 103) mit einer Hauptoberfläche (21) und einer Rückseite (22) und eine Elektrode (24, 80, 90), die in dem dielektrischen Körper (23) enthalten ist, wobei die Elektrode (24, 80, 90) dazu angepasst ist, bei Anlegen einer Spannung Plasma zu erzeugen, wobei die Plasma-Elektrodenplatte (20, 101, 112) **dadurch gekennzeichnet ist, dass**:
die Elektrode (24, 80, 90) eine Vielzahl von Durchgangslöchern (33, 81, 91) aufweist, von denen jedes die Elektrode (24, 80, 90) in einer Dickenrichtung durchdringt, und eine Oberfläche der Elektrode (24, 80, 90) eine gekrümmte Oberfläche ist; und
der dielektrische Körper (23, 103) die Elektrode (24, 80, 90) so bedeckt, dass er sich entlang der Außenfläche der Elektrode (24, 80, 90) erstreckt, und einen ungleichmäßig geformten Abschnitt (51, 61) sowohl auf der Hauptoberfläche (21) als auch auf der Rückseite (22) aufweist;
wobei ein Bereich des dielektrischen Körpers (23, 103) mit dem ungleichmäßig geformten Abschnitt (51, 61) einen welligen Querschnitt aufweist.

2. Plasma-Elektrodenplatte nach Anspruch 1, wobei der dielektrische Körper (23, 103) eine geschichtete Elektrode (24, 80, 90) enthält.

3. Plasma-Elektrodenplatte nach Anspruch 1 oder 2, wobei ein Abschnitt des dielektrischen Körpers (23, 103), der eine Oberfläche (41) der Elektrode (24, 80, 90) auf der Seite der Hauptoberfläche (21) oder eine Oberfläche (42) der Elektrode (24, 80, 90) auf der Seite der Rückseite (22) bedeckt, eine Dicke (T1, T2) von 1 µm bis 5.000 µm aufweist.

4. Plasma-Elektrodenplatte nach einem der Ansprüche 1 bis 3, wobei, in Dickenrichtung gesehen, die Elektrode (24, 80, 90) in einem Bereich des dielektrischen Körpers (23, 103) vorhanden ist, der einem konvexen Abschnitt (53, 63) des ungleichmäßig geformten Abschnitts (51, 61) entspricht.

5. Plasma-Elektrodenplatte nach einem der Ansprüche 1 bis 4, wobei ein konkaver Abschnitt (52) des ungleichförmig geformten Abschnitts (51) auf der Hauptoberfläche (21) des dielektrischen Körpers (23, 103) eine Tiefe (D1) aufweist, die größer ist als eine Tiefe (D2) eines konkaven Abschnitts (62) des ungleichförmig geformten Abschnitts (61) auf der Rückseite (22) des dielektrischen Körpers (23, 103).

6. Plasma-Elektrodenplatte nach einem der Ansprüche 1 bis 5, wobei die Elektrode (24) eine Vielzahl von Durchgangslöchern (33) aufweist, die durch eine Vielzahl von ersten linearen Abschnitten (31), die sich in einer ersten Richtung erstrecken, und eine Vielzahl von zweiten linearen Abschnitten (32), die sich in einer zweiten Richtung senkrecht zur ersten Richtung erstrecken, definiert sind.

7. Plasmareaktor (1, 100, 110), aufweisend eine Mehrzahl von Elektrodenplatten (20, 101, 112), die jeweils einen plattenartigen dielektrischen Körper (23, 103) mit einer Hauptoberfläche (21) und einer Rückseite (22) und eine Elektrode (24, 80, 90) aufweisen, die in dem dielektrischen Körper (23, 103) enthalten ist, wobei die Elektrodenplatten (20, 101, 112) so gestapelt sind, dass ein Spalt zwischen benachbarten Elektrodenplatten (20, 101, 112) gebildet wird, wobei der Plasmareaktor (1, 100, 110) so angepasst ist, dass er bei Anlegen einer Spannung zwischen benachbarten Elektrodenplatten (20, 101, 112) Plasma erzeugt, wobei der Plasmareaktor **dadurch gekennzeichnet ist, dass**
die Elektrode (24, 80, 90) jeder Elektrodenplatte (20, 101, 112) eine Vielzahl von Durchgangslöchern (33, 81, 91) aufweist, von denen jedes die Elektrode (24, 80, 90) in einer Dickenrichtung durchdringt, und eine Oberfläche der Elektrode (24, 80, 90) jeder Elektrodenplatte (20, 101, 112) eine gekrümmte Oberfläche ist; und
der dielektrische Körper (23, 103) jeder Elektrodenplatte (20, 101, 112) die Elektrode (24, 80, 90) so bedeckt, dass er sich entlang der Außenfläche der Elektrode (24, 80, 90) erstreckt und einen ungleichmäßig geformten Abschnitt sowohl auf der Hauptoberfläche (21) als auch auf der Rückfläche (22) aufweist, wobei ein Bereich des dielektrischen Körpers (23, 103) mit dem ungleichmäßig geformten Abschnitt (51, 61) einen welligen Querschnitt aufweist.

8. Plasmareaktor nach Anspruch 7, wobei der dielektrische Körper (23, 103) jeder Elektrodenplatte (20, 101, 112) eine geschichtete Elektrode (24, 80, 90) enthält.

9. Plasmareaktor nach Anspruch 7 oder 8, wobei ein Abschnitt des dielektrischen Körpers (23, 103), der eine Oberfläche (41) der Elektrode (24, 80, 90) auf der Seite der Hauptoberfläche (21) oder eine Oberfläche (42) der Elektrode (24, 80, 90) auf der Seite der Rückseite (22) bedeckt, eine Dicke (T1, T2) von 1 µm bis 5.000 µm aufweist.

10. Plasmareaktor nach einem der Ansprüche 7 bis 9, wobei, in einer Dickenrichtung jeder der Elektrodenplatten (20, 101, 112) gesehen, die Elektrode (24, 80, 90) in einem Bereich des dielektrischen Körpers (23, 103) vorhanden ist, der einem konvexen Abschnitt (53, 63) des ungleichmäßig geformten Abschnitts (51, 61) entspricht.

11. Plasmareaktor nach einem der Ansprüche 7 bis 10, wobei ein konkaver Abschnitt (52) des ungleichförmig geformten Abschnitts (51) auf der Hauptoberfläche (21) des dielektrischen Körpers (23, 103) eine Tiefe (D1) aufweist, die größer ist als eine Tiefe (D2) eines konkaven Abschnitts (62) des ungleichförmig geformten Abschnitts (61) auf der Rückseite (22) des dielektrischen Körpers (23, 103).

12. Plasmareaktor nach einem der Ansprüche 7 bis 11, wobei die Elektrode (24) eine Vielzahl von Durchgangslöchern (33) aufweist, die durch eine Vielzahl von ersten linearen Abschnitten (31), die sich in einer ersten Richtung erstrecken, und eine Vielzahl von zweiten linearen Abschnitten (32) definiert sind, die sich in einer zweiten Richtung erstrecken, die die erste Richtung schneidet.

## Revendications

1. Plaque d'électrode à plasma (20, 101, 112) comprenant un corps diélectrique de type plaque (23, 103) ayant une surface principale (21) et une surface arrière (22), et une électrode (24, 80, 90) comprise dans le corps diélectrique (23), l'électrode (24, 80, 90) étant adaptée pour générer un plasma lors de l'application d'une tension, la plaque d'électrode à plasma (20, 101, 112) étant **caractérisée en ce que** :
l'électrode (24, 80, 90) possède une pluralité de trous traversants (33, 81, 91), chacun pénétrant l'électrode (24, 80, 90) dans une direction d'épaisseur, et une surface de l'électrode (24, 80, 90) est une surface courbe ; et
le corps diélectrique (23, 103) couvre l'électrode (24, 80, 90) de façon à s'étendre le long de la surface externe de l'électrode (24, 80, 90) et possède une portion de forme irrégulière (51, 61) sur chacune de la surface principale (21) et de la surface arrière (22) ;
dans laquelle une région du corps diélectrique (23, 103) possédant la portion de forme irrégulière (51, 61) présente une section transversale ondulée.

2. Plaque d'électrode à plasma selon la revendication 1, dans laquelle le corps diélectrique (23, 103) comprend une électrode en couches (24, 80, 90).

3. Plaque d'électrode à plasma selon la revendication 1 ou 2, dans laquelle une portion du corps diélectrique (23, 103) couvrant une surface (41) de l'électrode (24, 80, 90) sur le côté surface principale (21) ou une surface (42) de l'électrode (24, 80, 90) sur le côté surface arrière (22) présente une épaisseur (T1, T2) de 1 µm à 5000 µm.

4. Plaque d'électrode à plasma selon l'une quelconque des revendications 1 à 3, dans laquelle, vue dans une direction d'épaisseur, l'électrode (24, 80, 90) est présente dans une région du corps diélectrique (23, 103) correspondant à une portion convexe (53, 63) de la portion de forme irrégulière (51, 61).

5. Plaque d'électrode à plasma selon l'une quelconque des revendications 1 à 4, dans laquelle une portion concave (52) de la portion de forme irrégulière (51) sur la surface principale (21) du corps diélectrique (23, 103) présente une profondeur (D1) plus grande qu'une profondeur (D2) d'une portion concave (62) de la portion de forme irrégulière (61) sur la surface arrière (22) du corps diélectrique (23, 103).

6. Plaque d'électrode à plasma selon l'une quelconque des revendications 1 à 5, dans laquelle l'électrode (24) possède une pluralité de trous traversants (33) définis par une pluralité de premières portions linéaires (31) s'étendant dans une première direction et une pluralité de deuxièmes portions linéaires (32) s'étendant dans une deuxième direction perpendiculaire à la première direction.

7. Réacteur à plasma (1, 100, 110) comprenant une pluralité de plaques d'électrode (20, 101, 112) comprenant chacune un corps diélectrique de type plaque (23, 103) ayant une surface principale (21) et une surface arrière (22), et une électrode (24, 80, 90) comprise dans le corps diélectrique (23, 103), les plaques d'électrode (20, 101, 112) étant empilées de sorte qu'un espace soit formé entre des plaques d'électrode (20, 101, 112) adjacentes, le réacteur à plasma (1, 100, 110) étant adapté pour générer un plasma lors de l'application d'une tension entre des plaques d'électrode (20, 101, 112) adjacentes, le réacteur à plasma étant **caractérisé en ce que** :
l'électrode (24, 80, 90) de chaque plaque d'électrode (20, 101, 112) possède une pluralité de trous traversants (33, 81, 91), chacun pénétrant l'électrode (24, 80, 90) dans une direction d'épaisseur, et une surface de l'électrode (24, 80, 90) de chaque plaque d'électrode (20, 101, 112) est une surface courbe ; et
le corps diélectrique (23, 103) de chaque plaque d'électrode (20, 101, 112) couvre l'électrode (24, 80, 90) de façon à s'étendre le long de la surface externe de l'électrode (24, 80, 90) et possède une portion de forme irrégulière sur chacune de la surface principale (21) et de la surface arrière (22), dans lequel une région du corps diélectrique (23, 103) possédant la portion de forme irrégulière (51, 61) présente une section transversale ondulée.

8. Réacteur à plasma selon la revendication 7, dans lequel le corps diélectrique (23, 103) de chaque plaque d'électrode (20, 101, 112) comprend une électrode en couches (24, 80, 90).

9. Réacteur à plasma selon la revendication 7 ou 8, dans lequel une portion du corps diélectrique (23, 103) couvrant une surface (41) de l'électrode (24, 80, 90) sur le côté surface principale (21) ou une surface (42) de l'électrode (24, 80, 90) sur le côté surface arrière (22) présente une épaisseur (T1, T2) de 1 µm à 5000 µm.

10. Réacteur à plasma selon l'une quelconque des revendications 7 à 9, dans lequel, vue dans une direction d'épaisseur de chacune des plaques d'électrode (20, 101, 112), l'électrode (24, 80, 90) est présente dans une région du corps diélectrique (23, 103) correspondant à une portion convexe (53, 63) de la portion de forme irrégulière (51, 61).

11. Réacteur à plasma selon l'une quelconque des revendications 7 à 10, dans lequel une portion concave (52) de la portion de forme irrégulière (51) sur la surface principale (21) du corps diélectrique (23, 103) présente une profondeur (D1) plus grande qu'une profondeur (D2) d'une portion concave (62) de la portion de forme irrégulière (61) sur la surface arrière (22) du corps diélectrique (23, 103).

12. Réacteur à plasma selon l'une quelconque des revendications 7 à 11, dans lequel l'électrode (24) possède une pluralité de trous traversants (33) définis par une pluralité de premières portions linéaires (31) s'étendant dans une première direction et une pluralité de deuxièmes portions linéaires (32) s'étendant dans une deuxième direction en intersection avec la première direction.
